# EUROPEAN PATENT SPECIFICATION

(11) **EP 1 243 390 B1**
(45) Date of publication and mention of the grant of the patent: **02.08.2006**
(21) Application number: 02100259.7
(22) Date of filing: 15.03.2002
(51) Int. Cl.: B29C 33/38, B29D 30/06, B29L 30/00

(54) **Composite blade for a tire curing mould**
Verbundblatt für ein Reifenvulkanisierformwerkzeug
Lame composite pour un moule de vulcanisation de pneumatiques

(30) Priority: 23.03.2001 US 815754
(43) Date of publication of application: 25.09.2002
(73) Proprietor: THE GOODYEAR TIRE & RUBBER COMPANY, Akron, Ohio 44316-0001 (US)
(72) Inventor: Domange, André, 6740 Etalle (BE); Louis, Patrick, 6600 Bastogne (BE)
(74) Representative: Kutsch, Bernd

(56) References cited:
- EP-A- 0 934 836
- WO-A-98/58786
- WO-A-99/21701
- US-A- 3 067 506
- US-A- 5 980 810
- US-B1- 6 193 492
- PATENT ABSTRACTS OF JAPAN vol. 017, no. 217 (M-1403), 28 April 1993 (1993-04-28) & JP 04 353431 A (TOYO TIRE & RUBBER CO LTD), 8 December 1992 (1992-12-08)
- PATENT ABSTRACTS OF JAPAN vol. 2000, no. 12, 3 January 2001 (2001-01-03) & JP 2000 255218 A (BRIDGESTONE CORP), 19 September 2000 (2000-09-19)
- PATENT ABSTRACTS OF JAPAN vol. 015, no. 267 (M-1133), 8 July 1991 (1991-07-08) & JP 03 090317 A (OHTSU TIRE & RUBBER CO LTD:THE), 16 April 1991 (1991-04-16)
- PATENT ABSTRACTS OF JAPAN vol. 1996, no. 05 31 May 1996 -& JP 08 025 362 A (BRIDGESTONE CORP.) 30 January 1996

## Description

### Technical Field

The present invention relates to blades for curing molds. More particularly to composite type blades that have thicknesses which can easily be tailored to the tire tread property requirements and a method of fabricating such composite blades.

### Background of the Invention

Blades for tire curing molds are well known in the art of tire manufacture. Such blades are conventionally made from a running length or strip of a metallic material such as steel, stainless steel or brass. The strip is generally 0.4 mm to 1 mm thick and has a length of 10 to 40 mm. Sometimes the strips are of solid form; other times perforated strips are used to form the blades.

US-A- 3,880,020, a method and apparatus for making blades, is disclosed which enables small quantity lots of a multiplicity of different styles of blades to be made rapidly and economically. The method and apparatus permits blades to be blanked out from the stack of material by a plurality of punch and die sets while the stock remains securely attached to an endless loop carrier. If so desired, a plurality of sub-presses are used for forming bends in the blade.

In US-A- 3,581,535, a similar method and apparatus for making blades is disclosed. The method and apparatus for making blades for use in tire molds includes piercing, notching, bending or otherwise altering the shape of a free end of strip material by successively positioning the free end and a plurality of shape altering tools in operative engagement and cutting off the formed blade from the free end. Bends, cuts, notches and holes are possible.

WO-A1-99/21701 discloses a method of fabricating a composite blade employing the steps of forming a blade blank and encapsulating at least one end in a second material by placing the end in a die and molding an enlarged cross-section of a second material around the end. Preferably, the second material is a powdered metal.

Further methods of fabricating composite blades having complex shapes are known from JP 04 353 431 A and US 3,067,506 A.

The blades create sipes in a tread during the vulcanization step of a green tire in a curing mold. A sipe is a narrow groove or incision in the tread and closes when located in the footprint, i.e., in the contact patch of the tire tread with a flat surface at zero speed and under normal load and inflation pressure. The sipes may extend circumferentially or laterally about the tread in a straight, curved or zig-zag manner and may be as deep as the block and rib defining grooves. The sipes may pass through or cut one or both sides of the ribs and blocks or be confined to their interior. It is also known to have the sipes lying in planes which are not perpendicular to tangents to the surface of the tread at their point of intersection. It is further known to use sipes having a depth which varies along their length as well as sipes which have varying thicknesses. However, the manufacturing of such blades is expensive and lacks flexibility.

It is an object of the present invention to provide a manufacturing process for making a set of blades having different thicknesses.

It is a further object of the present invention to provide a manufacturing process for making blades having varying thicknesses along their length.

It is a further object of the present invention to provide a manufacturing process for making blades having varying thicknesses along their depth.

It is a still further object of the present invention to provide a mold for vulcanizing a tire as well as tire vulcanized in such mold.

### Summary of the Invention

The invention provides a method of manufacturing a composite blade having at least two blade portions for a tire curing mold comprising the steps of: providing a first strip of metallic material commonly used to form blades for tire curing molds; stamping or punching out from the strip various shapes to make main blade portions; providing a second strip of metallic material having a width different than the width of the first strip; stamping or punching out from the second strip a set of second blade portions having longitudinal and lateral dimensions; assembling a main portion and at least one of the second blade portions; and affixing the different blade portions together to form the composite blade so that only part of the different blade portions overlap.

Preferably, the blade portions are affixed by the step of welding or soldering the blade portions together.

The method further may have the steps of providing further strips of metallic material; stamping or punching out from the further strips further sets of blade portions having a longitudinal and lateral dimensions which are preferably at most equal to those of the main blade portions; assembling a main and at least one of the second blade portions together with at least one of the further portions; and affixing the different blade portions together. A composite blade obtained through the method is also disclosed.

In one embodiment the second strip of metallic material has the same thickness as the first strip and the metal of the second strip of metallic material has the same composition as the first strip. The composite blades may have any number of slots or cuts to form various projections.

A mold including the blade and a tire cured in the mold are also disclosed.

To acquaint persons skilled in the art, most closely related to the instant invention, certain preferred embodiments are now described with reference to the annexed drawings. These embodiments are illustrative and can be modified in numerous ways within the scope of the invention defined in the claims.

### Brief Description of the Figures

Fig. 1 is a view of a first strip used to form the main portion of the composite blade according to the invention;
Figs. 2 to 4 show various main portions of differing shapes used in assembling the composite blades according to the invention.
Fig. 5 is a view of a second strip used to form second portions of the composite blade according to the invention;
Figs. 6 to 10 show various second blade portions of differing shapes used in assembling the blades according to the invention;
Figs. 11 to 17 are views of substantially flat composite blades obtained by using the process according to the invention;
Figs. 18 to 20 are side views of composite blades having varying depths obtained by using the process according to the invention;
Figs. 20 to 23 are top views on composite blades according to the invention; and
Figs. 24 to 25 are schematic sections across a block of rubbery tread material.

### Detailed Description of the Invention

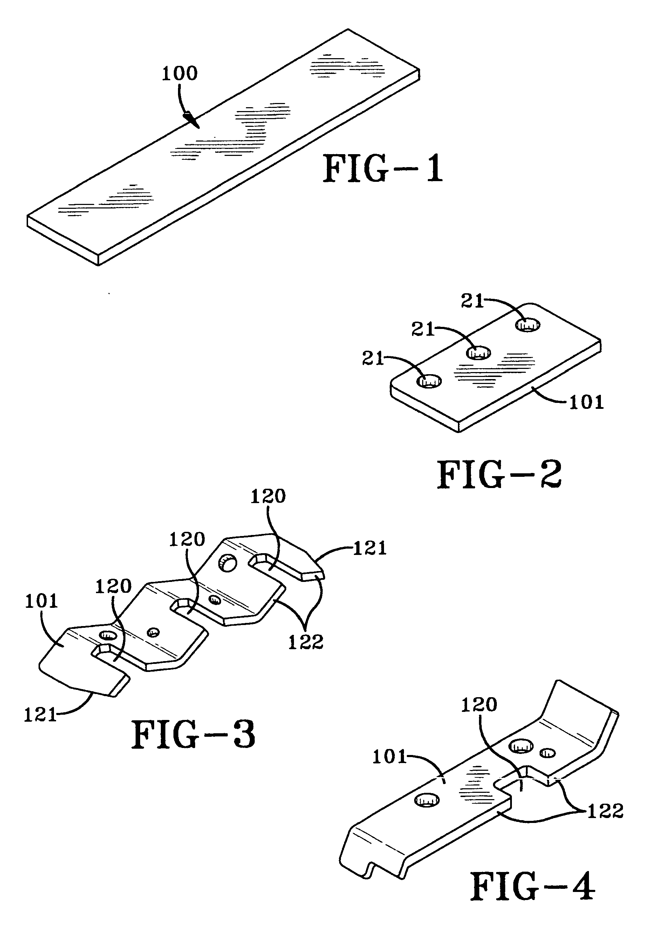

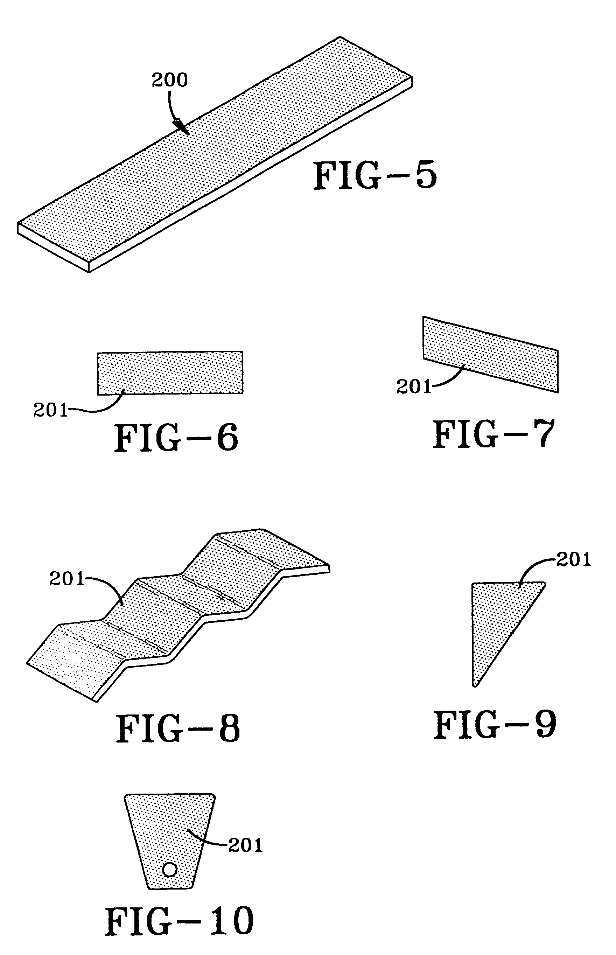

With reference to Fig. 1, a portion of a first strip 100 of metallic material commonly used to form blades for tire curing molds is shown. The resultant blades are stamped or punched out from the strip 100 and take various shapes as shown in Figs. 2 to 4. The blades may have any number of slots 120 or cuts 121 to form the various projections 122. The blades may be wavy as shown in Fig. 3 or have bends at their extremities (see Fig. 4). These features are well known in the tire building art and such blades are used as main portion of the composite blade according to the invention.

According to the invention and with reference to Figs. 5 to 10, a second strip 200 of metallic material commonly used to form blades for tire curing molds is stamped or punched to form a second set of blade portions out from the strip 200 which may take various shapes as shown in Figs. 6 to 10. This second strip 200 of metallic material may have the same thickness as the first strip 100, a somewhat higher or smaller thickness. Usually the thickness of the first strip 100 ranges between 0.3 and 1 mm and the thickness of the second strip 200 between 0.3 and 0.8 mm. The metallic material of the second strip 200 may be the same as the one of the first strip 100. Preferred metallic material is steel because of its low cost. Further materials of interest are aluminum, nickel alloy, and titanium. Combinations of carbon steel constituting the first strip 100 with titanium or other metals containing steel alloys constituting the second strip 200 would allow a great flexibility in the choice of the blade portion thicknesses.

The main blade portion 101 made out of the first strip 100 is usually at least partly anchored in the mold by holes 21 (see Fig. 2). This anchoring must be sufficient to insure that the composite blades do not pull out when the tread is extracted from the tire curing mold. The blade portion 201 made out of the second strip 200 is or is not anchored in the mold, depending on the design of the blade.

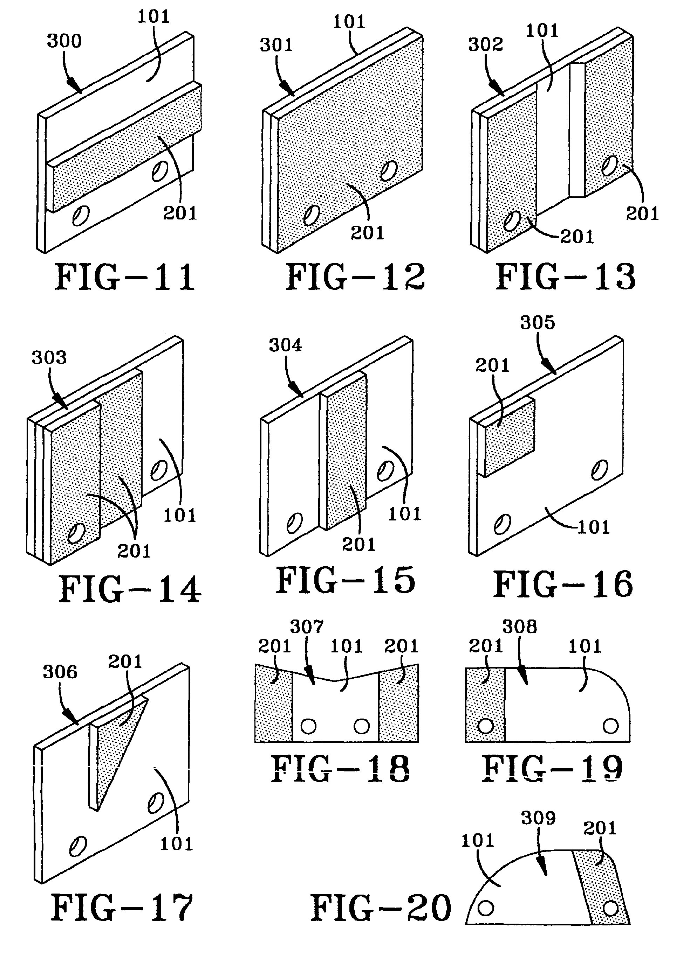

The second blade portions 201 made out of the second strip 200 may take the shape of a rectangle (Fig. 6), parallelogram (Fig. 7), triangle (Fig. 9), trapezoid (Fig. 10) and may basically have any geometrical shape which is considered by a man skilled in the art to confer favorable properties to the tire tread. They may be flat as shown in Figs. 6 and 7, or they may be given a curved or wavy shape as shown in Fig. 8, depending on the fact that they will be assembled to a corresponding flat, curved or wavy main portion obtained out of the first strip 100. Alternatively the main portion 101 and the second portion 201 may be given at first a flat shape and after assembly stamped in order to obtain the desired wavy, sinusoidal or crimped or similar shape.

After assembly, the main and second blade portions 101, 201 are affixed together. This may be done by gluing using a high temperature epoxy adhesive or a high temperature cement. Another possibility is to subject the assembled portions to a combined compression and heat treatment. A still further possibility is to braze or solder the two portions. The presently preferred way is to weld the different portions together along their lateral adjacent sides, or at multiple points called "spot welding".

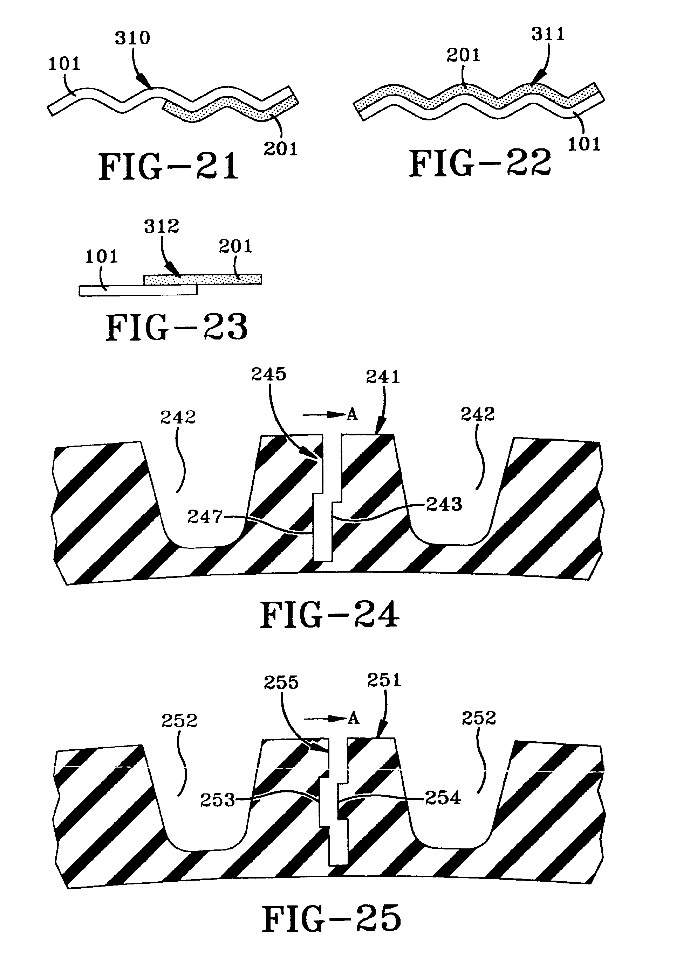

The composite blades 300-312, according to the invention, may be fabricated at low cost in a great variety of shapes. Figs. 11 through 23 illustrate a few of these exemplary shapes, featuring different depths, widths and lengths. Fig. 11 shows a blade 300 providing a sipe having a greater width in its radially middle portion, Fig. 12 shows a blade 301 having substantially a width double to the one offered by single metallic strips 100 or 200. Figs. 13, 14 and 15 show blades 302, 303, 304 providing sipes with laterally stepped off widths, allowing to tailor the elastomeric block stiffness to the requirements; such sipes influence locally transverse deformation of the blocks they are included in. Fig. 16 shows a blade 305 providing a sipe having on part of its lateral length and on part of its radially inner portion, a higher width. Fig. 17 shows a blade 306 producing a sipe having on part of its length a higher width, which length decreases towards the tread surface. Fig. 18 shows a blade 307 providing a sipe having on both sides a higher width and a depth decreasing from both sides towards the center. Fig. 19 shows a blade 308 providing a sipe having a first side a higher width and a depth decreasing towards the second side. Fig. 20 shows a blade 309 providing a sipe having a lateral length decreasing radially towards the tread bottom and a higher sipe width portion with a width and length remaining constant.

It must be appreciated that some of the composite blades obtained through the method according to the invention result in rather complicated blade layouts despite the fact that the manufacturing steps are simple.

As more specifically illustrated in Figs. 21 and 22, the blades 310, 311 obtained according to the method of the invention may include the steps of bending. The bending step may take place before or after assembly of the different blade portions. The blades may further be crimped, notching or perforated before or after assembly. In Fig. 23 a blade 312 is shown where only part of the two metal sheets 101 and 201 overlap. The sheets 101 and 201 can have the same height or different heights.

With reference to Figs. 24 and 25, the possibility of making interlocking sipes in the tread blocks is illustrated. For ease of representation, only one sipe per block 241, 251 is shown and the block and grooves are not to scale. It is understood that a block includes usually several sipes. In the instant case, the further sipes may have the same section than the one shown in the drawing. In Fig. 24 a block 241 is defined by laterally and circumferentially extending grooves 242, wherefrom only one kind can be represented in this cross-section. The block 241 includes sipe 245 which has in the case of the drawing throughout its height, substantially uniform thickness. However, slightly above half-height, the sipe 245 shows a protrusion 243 on one side and a recess 247 on the other. Such sipe 245 is easily obtained according to the inventive method by assembling to the radially outer part of a first side of a main portion 101 as shown in Fig. 2, a second blade portion 201 as shown in Fig. 6; a further similar second blade portion 201, as shown in Fig. 6 is assembled to the radially inner part of main portion 101.

It can be easily seen that if there is block deformation as indicated by arrow A, the protrusion 243 located on one side of the sipe, advances towards recess 247 on the other side of the sipe, until it is in contact with such. Once in contact, protrusion 243 opposes any further deformation of the block 245. Opposite deformation does not result in such interlocking and the two adjacent sipe sidewalls may slide along each other as far as allowed by the rigidity of the rubbery material and the forces applied thereto. It appears that such sipe is directional. It appears further that such interlocking stops when the tire is worn down to the protrusion 243. At that time the stiffness of the block has increased and a limiting of flexing is no more desired.

With reference to Fig. 25, the possibility of making bi-directional interlocking sipes 255 in the tread blocks 251 is illustrated. Also, in this case only one sipe per block is shown for ease of representation. Furthermore, the different elements are not to scale. In Fig. 25, a block 251 is defined by laterally and circumferentially extending grooves 252. The block includes sipe 255 which has in the case of the drawing throughout its height, substantially uniform thickness. However, slightly above half-height, the sipe shows a protrusion 254 on one side and a recess 253 on the other. Such sipe is easily obtained according to the inventive method by assembling to a main portion 101 as shown in Fig. 2, two blade portion as shown in Fig. 6, to one side, and more specifically a first one 101 to its radially outer portion and a second one 201 to its radially inner portion, leaving a free portion in the middle of the main portion 101, which free portion defines in the cured tire the protrusion 254. On the middle portion of the other side of the main portion 101 a blade portion 201 as shown in Fig. 6 is assembled, which blade portion defines the recess 253 in the cured tire.

It can be easily seen that if there is block deformation in a direction indicated by arrow A or in the opposite direction, protruding rubbery material 254 will move towards recess 253 on the other side of the sipe, until it nests into recess 253 opposing any further deformation on the block 251. The amount of deformation required to have such interlocking depends on the width of the sipe and on the layout, mainly transverse dimensions, of the recess and the protrusion. It appears that such sipe has no directional effect in a new tire. Once the tire is about half worn down, the sipe will have substantially a cross-section which can be compared to that shown in Fig. 24 and its behavior will be, as explained in connection with Fig. 24.

In case of the sipes shown in Figs. 24 and 25, the loss due to wear of the non-directional interlocking (Fig. 24) or the change from non-directional to directional of the interlocking (Fig. 25) may be controlled by giving the recess 247, 253 and similarly the protrusion 243, 254 a small inclination. This can easily be implemented by assembling second blade portions 201, as shown in Fig. 7 to the main portion 101 of the composite blade 300-312.

## Claims

1. A method of manufacturing a composite blade (300-312) having at least two blade portions (101,201) for a tire curing mold, the method comprising the steps of:
providing a first strip (100) of metallic material commonly used to form blades for tire curing molds;
stamping or punching out from the strip various shapes to make main blade portions (101);
providing a second strip (200) of metallic material having a width different than the width of the first strip;
stamping or punching out from the second strip (200) a set of second blade portions (201) having longitudinal and lateral dimensions;
assembling a main portion and at least one of the second blade portions (201); and
affixing the different blade portions (101, 201) together to form the composite blade, **characterized in that** the different blade portions (101, 201) are affixed together so that only part of the different blade portions overlap (312).

2. The method according to claim 1, comprising the further step of providing further strips of metallic material;
stamping or punching out from the further strips sets of blade portions having a longitudinal and lateral dimensions which are preferably at most equal to those of the main blade portions;
assembling a main and at least one of the second blade portions together with at least one of the further portions; and
affixing the different blade portions together.

3. The method according to claim 1, wherein the different blade portions (101, 201) are welded together along their lateral adjacent sides.

4. A composite blade (300-312) obtained through the method of any of claims 1 to 3.

5. The composite blade according to claim 4, wherein the metal of the second strip (200) of metallic material has the same compositions as the first strip (100).

6. The composite blade according to claims 4 or 5, wherein the composite blades have any number of slots (120) or cuts (121) to form various projections.

7. The composite blade according to claim 4, wherein the first strip (100) is made of carbon steel, and wherein the second strip (200) is made of titanium or other metals containing steel alloys.

8. The composite blade according to claim 4, wherein the first strip (100) and the second strip is made of steel.

9. A mold including a blade according to any of claims 4 to 9.

## Patentansprüche

1. Ein Verfahren zur Herstellung einer Verbundlamelle (300-312) mit wenigstens zwei Lamellenteilen (101,201) für ein Reifenvulkanisierformwerkzeug, wobei das Verfahren die Schritte umfasst des :
Verschaffens eines ersten Streifens (100) aus Metallmaterial, das üblicherweise zum Formen von Lamellen für Reifenvulkanisierformwerkzeuge verwendet wird ;
Stanzens oder Ausstanzens verschiedener Formen aus dem Streifen, um Hauptlamellenteile (101) herzustellen ;
Verschaffens eines zweiten Streifens (200) aus Metallmaterial, mit einer Breite, die von der Breite des ersten Streifens verschieden ist ;
Stanzens oder Ausstanzens eines Satzes zweiter Lamellenteile (201) mit längsgerichteten und lateralen Abmessungen aus dem zweiten Streifen (200) ;
Zusammenbauens eines Hauptteils und wenigstens eines der zweiten Lamellenteile (201) ;
und Zusammenfügens der verschiedenen Lamellenteile (101,201), um die Verbundlamelle zu bilden, **dadurch gekennzeichnet, dass** die verschiedenen Lamellenteile (101,201) derart zusammengefügt werden, dass nur ein Teil der verschiedenen Lamellenteile (312) überlappt.

2. Das Verfahren gemäß Anspruch 1, umfassend den weiteren Schritt des Verschaffens weiterer Streifen aus Metallmaterial ;
Stanzens oder Ausstanzens von Sätzen von Lamellenteilen, welche längsgerichtete und laterale Abmessungen haben, die vorzugsweise höchstens gleich denen der Hauptlamellenteile sind aus den weiteren Streifen ;
Zusammenbauens eines Haupt- und wenigstens eines der zweiten Lamellenteile zusammen mit wenigstens einem der weiteren Teile ; und
zusammen Befestigens der verschiedenen Lamellenteile.

3. Das Verfahren gemäß Anspruch 1, wobei die verschiedenen Lamellenteile (101,201) entlang ihrer lateral benachbarten Seiten zusammengeschweißt sind.

4. Eine durch das Verfahren gemäß einem der Ansprüche 1 bis 3 erhaltene Verbundlamelle (300-312).

5. Dei Verbundlamelle gemäß Anspruch 4, wobei das Metall des zweiten Streifens (200) aus Metallmaterial dieselbe Zusammensetzungen wie der erste Streifen (100) hat.

6. Die Verbundlamelle gemäß den Ansprüchen 4 oder 5, wobei die Verbundblamellen eine Anzahl von Schlitzen (120) oder Einschnitten (121) zum Formen verschiedener Vorsprünge aufweisen.

7. Die Verbundlamelle gemäß Anspruch 4, wobei der erste Streifen (100) aus Kohlenstoffstahl hergestellt ist und wobei der zweite Streifen (200) aus Titan oder andere Metalle enthaltenden Stahllegierungen, hergestellt ist.

8. Die Verbundlamelle gemäß Anspruch 4, wobei der erste Streifen (100) und der zweite Streifen aus Stahl hergestellt ist.

9. Ein Formwerkzeug, welches eine Lamelle gemäß einem der Ansprüche 4 bis 9 beinhaltet.

## Revendications

1. Procédé de fabrication d'une lame composite (300-312) possédant au moins deux portions de lames (101, 201) pour un moule de vulcanisation de bandage pneumatique, le procédé comprenant les étapes consistant à :
procurer un premier ruban (100) de matière métallique que l'on utilise communément pour former des lames destinées à des moules de vulcanisation de bandages pneumatiques ;
imprimer diverses configurations au ruban par estampage ou par découpe pour obtenir des portions principales de lames (101) ;
procurer un deuxième ruban (200) d'une matière métallique dont la largeur est différente de celle du premier ruban ;
obtenir un jeu de deuxièmes portions de lames (201), par estampage ou par découpe, à partir du deuxième ruban (200), possédant des dimensions latérales et longitudinales ;
assembler une portion principale et au moins une des deuxièmes portions de lames (201) ; et
fixer les différentes portions de lames (101, 201) l'une à l'autre pour former la lame composite, **caractérisé en ce que** les différentes portions de lames (101, 201) sont fixées l'une à l'autre de telle sorte que seulement une partie des différentes portions de lames présente un chevauchement (312).

2. Procédé selon la revendication 1, comprenant l'étape supplémentaire consistant à procurer des rubans supplémentaires d'une matière métallique ;
obtenir des jeux de portions de lames par estampage ou par découpe, à partir des rubans supplémentaires, possédant des dimensions latérales et longitudinales qui sont de préférence au maximum égales à celles des portions principales de lames ;
assembler une portion principale de lame et au moins une des deuxièmes portions de lames avec au moins une des portions supplémentaires ; et
fixer les unes aux autres les différentes portions de lames.

3. Procédé selon la revendication 1, dans lequel les différentes portions de lames (101, 201) sont soudées les unes aux autres le long de leurs côtés latéraux adjacents.

4. Lame composite (300-312) que l'on obtient via le procédé selon l'une quelconque des revendications 1 à 3.

5. Lame composite selon la revendication 4, dans laquelle le métal du deuxième ruban (200) de matière métallique possède la même composition que celle du premier ruban (100).

6. Lame composite selon la revendication 4 ou 5, dans laquelle les lames composites possèdent n'importe quel nombre de fentes (120) ou de découpes (121) pour former diverses saillies.

7. Lame composite selon la revendication 4, dans laquelle le premier ruban (100) est constitué d'acier au carbone, et dans laquelle le deuxième ruban est constitué de titane ou par des alliages à base d'acier contenant d'autres métaux.

8. Lame composite selon la revendication 4, dans laquelle le premier ruban (100) et le deuxième ruban sont constitués d'acier.

9. Moule englobant une lame selon l'une quelconque des revendications 4 à 8.
